# EUROPEAN PATENT APPLICATION

(11) **EP 1 418 738 A1**
(43) Date of publication of application: **12.05.2004**
(21) Application number: 02425678.6
(22) Date of filing: 06.11.2002
(51) Int. Cl.: H04M 1/725, H04Q 7/32, H04L 29/08

(54) **Apparatus and method for supporting a radio communication device in transmitting/receiving messages in format not serviced by the radio communication device**

(71) Applicant: MOTOROLA, INC., Schaumburg, IL 60196 (US)
(72) Inventor: Martini, Simone, 10036 Torino (IT)
(74) Representative: Gibson, Sarah Jane

(57) **Abstract**

In accordance with the present invention, there is provided an apparatus (100) and a method for supporting a radio communication device (114) in receiving and transmitting messages in a first format that is not serviced by said radio communication device. Said apparatus comprises an Interface Manager (102) operable to forward said message to and from said radio communication device (114) on reception and/or transmitting of said message and a Graphic User Interface Manager (112) operable to convert messages from/to said first format.

## Description

### Technical Field

The present invention relates to telecommunication systems, and in particular to an apparatus and a method for supporting a radio communication device in processing messages that are not otherwise serviced by this radio communication device. The invention may be also applied in the field of testing different messaging services.

### Background

With the progress in communication technology and frequent emerging of new services some problems may appear. One of the problems is that the devices that are already in use may not support the new services. This forces users either to do without the new services or to buy a new device. The other problem is that despite the technology of the new service actually existing there is no equipment on the market that supports such services. The results of this situation are problems with performing interoperability tests, and other types of tests necessary before actual release of the service or device.

US patent No. US642828B1 discloses an internet server and a method of providing access to e-mail and internet services for mobile phones that do not support these services. In this solution, an e-mail message addressed to the mobile phone is divided by an internet server into a plurality of portions with length less than the maximum imposed by the SMS. Each portion is transmitted as a separate message by the internet server to the mobile phone. For accessing a web page, the mobile phone generates a request message, which includes a web page address. This request is transmitted to the internet server, which accesses the requested web page and generates a plurality of messages, which include the web page content.

The main disadvantage of the prior art technique is that it is limited to textual content of the accessed service.

### Summary of the Invention

There is a need for an apparatus and a method for supporting a radio communication device in receiving and transmitting messages in a format that is not serviced by this device, which alleviate or overcome the disadvantages of the prior art.

In accordance with the present invention, there is thus provided an apparatus for supporting a radio communication device in receiving and transmitting messages in a first format, the first format not being serviced by said radio communication device. Said apparatus comprises an Interface Manager operable to forward said message to and from said radio communication device on reception and/or transmitting of said message and a Graphic User Interface Manager (GUI Manager) operable to convert messages from/to said first format.

Said GUI Manager contains a Message Engine for parsing said message on its reception connected to said Interface Manager and a Binary Engine, connected to said Message Engine, for converting parsed elements to/from a format understandable for a computing device on which said GUI Manager works. Said GUI Manager also contains an XML Engine, connected to said Binary Engine, that after said message reception builds an XML representation of said message. The XML language on said message transmitting parses and converts an XML file into binary elements. A Message Formatter is connected to said Binary Engine, and said Interface Manager, for optimizing a message to be transmitted.

In accordance with another aspect of the present invention there is thus provided a method of supporting a radio communication device in receiving messages in a first format, the first format not being serviced by said radio communication device. The method containing the following steps: receiving a message in said first format; a Message Engine taking said message, the Message Engine being run on a computing device connected to said radio communication device; the Message Engine recognizing and separating elements of said message; converting said elements of said message into a second format, wherein said second format is understandable for an application responsible for displaying of said message on a display screen; and finally displaying the message on the display screen.

In accordance with yet another aspect of the present invention there is thus provided a method of supporting a radio communication device in transmitting messages in a first format, the first format not being serviced by said radio communication device. The method containing the following steps: generating a message in a second format, which consist of at least one element, wherein said message is generated on a computing device connected to said radio communication device; converting said elements into a message in said first format; forwarding said message to a Message Formatter; opitimization of said message; forwarding said message to said radio communication device; said radio communication device transmitting said message.

In yet another aspect of the present invention said radio communication device can be replaced with a radio communication device software simulator. This will enable extensive testing of software applications designed for real radio communication devices, even before said devices are actually manufactured.

An advantage of the present invention is that it makes possible transmitting and receiving of messages using the radio communication device, which does not support the format of these messages.

Another advantage of the present invention is that, the apparatus is flexible enough to provide the control and customization over the largest number of parameters as possible and, eventually, even on those features which will not be available to the users in the final products.

When used for testing, e.g. interoperability testing, the invention reveals another advantages:
- tests can be performed using a real, target communication network, thus making tests really meaningfull;
- tests may be performed on phones from different manufacturers.

### Brief description of the drawings

The present invention will be understood and appreciated more fully from the following detailed description taken in conjunction with the drawings in which:
Figure 1 is a general scheme of an apparatus in accordance with an embodiment of the invention;
Figure 2 is a diagram illustrating a method of processing a message during its reception in accordance with an embodiment of the invention.

Figure 3 is a diagram illustrating a method of processing a message during its transmitting in accordance with an embodiment of the invention.

### Detailed description of the preferred embodiment

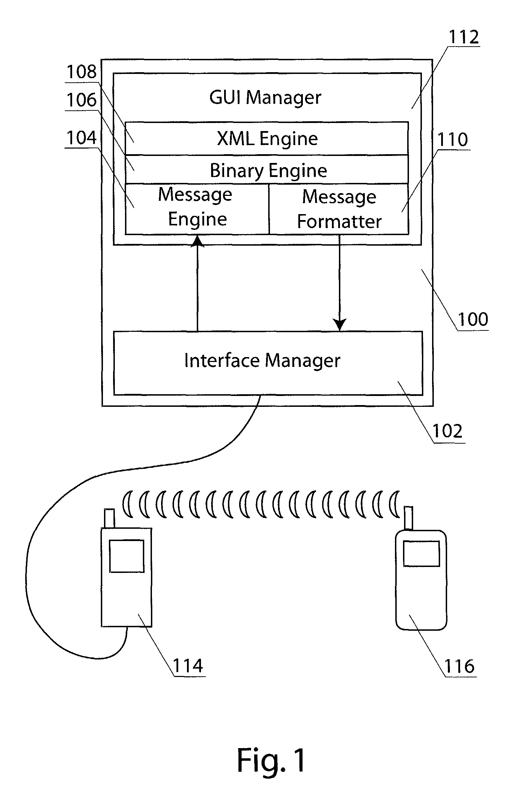

Referring to Fig. 1, a general scheme of an apparatus operating in accordance with the present invention is presented. In one particular embodiment, the invention may be used to support the Enhanced Messaging Service (EMS) in a radio communication device, which does not otherwise service EMS.

The apparatus 100 according to the present invention is a computing device with a software application run on it, which allows transmitting and/or receiving EMS from any digital radio communication device 114 (e. g. digital mobile phone). Any EMS incoming to the radio communication device 114 connected with the apparatus 100 is automatically captured and translated into a graphical representation. It is important to note that, it is not necessary for the radio communication device 114 used to receive and/or transmit the EMS to be compatible with the content of the message.

With reference to Fig. 1, an Interface Manager 102 monitors the status of the connected radio communication device 114 and, when an EMS is received 201, immediately notifies the GUI Manager 112. At this point a Message Engine 104 takes out the data received by the radio communication device 114 in a binary format. Said Message Engine 104 is able to understand how many single fragments make up the whole EMS (music and images require multiple messages to be transmitted) and takes them out from the radio communication device 114 until the last one is received.

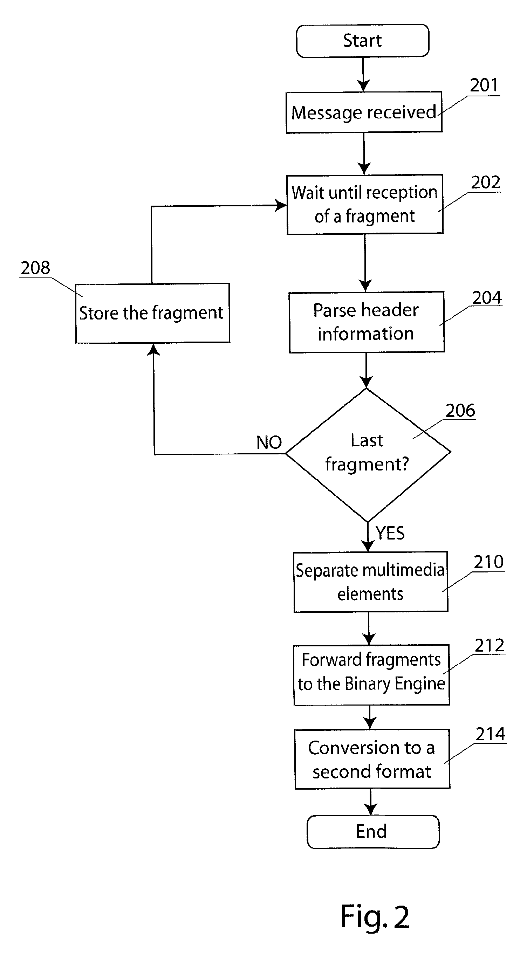

With reference to Fig. 2, said Message Engine 104 is responsible for correctly receiving 202 all the fragments composing an EMS. The received EMS contains some header bytes which have to be parsed 204 before the rest of the data. The header contains information about the transmitting phone's number, the data coding scheme used to represent the information and the timestamp of the message. A first check 206 on the payload must be carried out in order to find out how many fragments compose the whole message. The fragments are stored 208 until the last one is received.

Said Message Engine 104 is then responsible for recognizing and separating 210 the elements inserted into the EMS (such as images, animations, sounds, text) and forwarding them 212, still in binary format, to a Binary Engine 106.

The Binary Engine 106 is responsible for fragmenting and reassembling the elements which compose the EMS. Fragmentation and reassembling is done according to the international standard 3GPP 23.040. In the upward direction (EMS reception) the fragments received from the Message Engine 104 are broken into the constituent elements. Once the elements are fragmented, they are converted 214 into a second format understandable by the application (for example 6-bit color images are translated into .gif or .jpg images). The list of converted elements is then passed to the XML Engine 108.

Said XML Engine 108 builds an XML representation of the EMS based on the received data. After this step, the EMS is ready for being displayed on a display screen of the computing device.

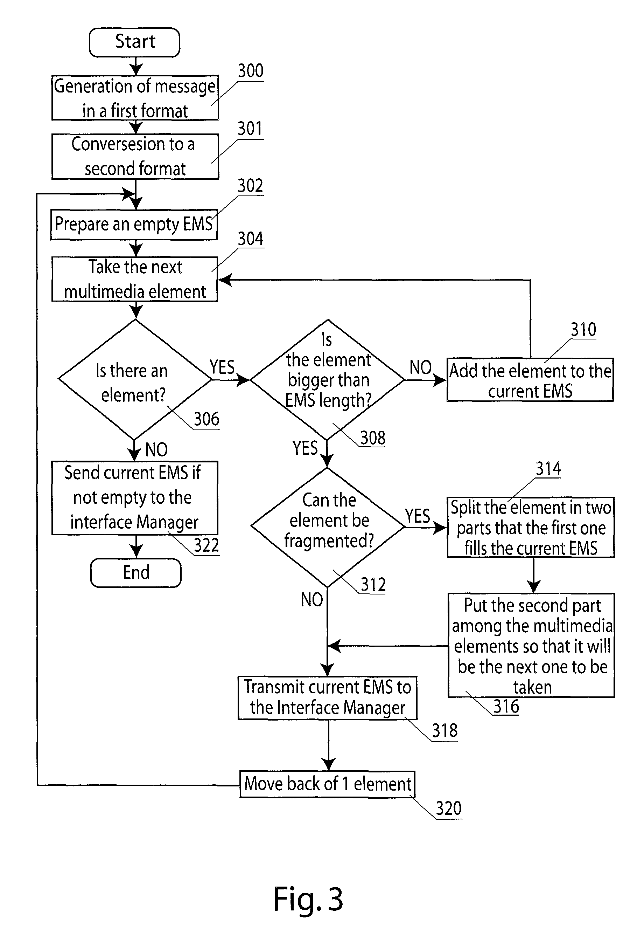

Referring to Fig. 1 and 3, when transmitting an EMS the user generates 300 a message, which is an XML file. The XML Engine 108 will translate the XML into the corresponding binary elements which are then forwarded to said Binary Engine 106. Said Binary Engine 106 makes all the conversion 301 of formats required by the 3GPP 23.040 standard, before passing all the data to said Message Formatter 110.

The Message Formatter 110, according to the architecture defined in Fig. 1, receives from the Binary Engine 106 a list of elements (images, sounds, text, animations) already converted into a format suitable for the transmission over the air. Upon reception of a list of elements, the Message Formatter 110 starts by preparing an empty EMS 302 and begins examining the elements in the list, one by one 304 until there are no more elements to be analyzed 306.

When an element is taken, its length is compared with the room available in the EMS 308. If an element's length does not exceed the room available in the current fragment, it is inserted as it is 310. The room available in the current fragment is then updated in order to take into account that the EMS prepared at 302 is no more empty. The Message Formatter 110 continues by taking another element from the list 304.

On the other hand, if the size of the element is bigger than the available room in step 308, the Message Formatter 110 checks whether it can be fragmented 312 or not. If the element cannot be fragmented, the current EMS is transmitted 322 to the Interface Manager 102 so that it can be transmitted it over the air. The element which was just removed from the list and that was not inserted into the EMS is pushed back into the list 320 so that it will still be available for the following steps. An empty EMS is prepared 302 and the flow continues 304 as already described.

If the element exceeding the room available in the current EMS can be fragmented, it is split into two fragments 314: the first fragment with a length equal to the available room in the current EMS and the second fragment will be the remaining part. The first fragment is inserted into the current EMS 316 that will be transmitted, being full, to the Interface Manager 318, while the second fragment is pushed back into the list of elements 320.

The procedure just described lasts until no more elements are left in the list. In that case, if the prepared EMS was not already transmitted to the Interface Manager, it is forwarded to it 322.

The present invention has provided an apparatus and a method for supporting a radio communication device in transmitting/receiving messages in a format not serviced by the radio communication device. This invention substantially alleviates the aforementioned problems.

## Claims

1. An apparatus (100) for supporting a radio communication device (114) in receiving and transmitting messages in a first format, the first format not being serviced by said radio communication device (114), said apparatus comprising:
(a) an Interface Manager (102) operable to forward said message to and from said radio communication device (114) on reception and/or transmitting of said message;
(b) a Graphic User Interface Manager (GUI Manager) (112) operable to convert messages from/to said first format.

2. The apparatus (100) according to claim 1, wherein said GUI Manager contains:
(a) a Message Engine (104) for parsing said message on its reception connected to said Interface Manager (102);
(b) a Binary Engine (106), connected to said Message Engine (104), for converting parsed elements to/from a format understandable for a computing device on which said GUI Manager (112) works;
(c) an XML Engine (108), connected to said Binary Engine (106), that after said message reception builds an XML representation of said message and that on said message transmitting, parses and converts an XML file into binary elements;
(d) a Message Formatter (110), connected to said Binary Engine (106) and said Interface Manager (102), for optimizing a message to be transmitted.

3. The apparatus (100) according to any one of the claims 1 or 2 wherein said radio communication device (114) is a radio communication device software simulator.

4. A method of supporting a radio communication device (114) in receiving messages in a first format, the first format not being serviced by said radio communication device (114), said method containing the following steps:
(a) receiving (201) a message in said first format;
(b) a Message Engine (104) taking said message (202), the Message Engine (104)being run on a computing device connected to said radio communication device (114);
(c) the Message Engine (104) recognizing and separating (210) elements of said message;
(d) converting (214) said elements of said message into a second format, wherein said second format is understandable for an application responsible for displaying of said message on a display screen;
(e) displaying the message on the display screen.

5. The method according to claim 4, wherein said second format is an XML format.

6. The method according to claim 4, wherein after the step of recognizing said elements by said Message Engine additional steps are performed:
(c1) transferring said elements to a Binary Engine;
(c2) converting said elements to a binary format.

7. The method according to claim 5, wherein after the step of building an XML representation of said elements an additional step is performed:
(d1) assigning an XML tag to each of said elements.

8. The method according to any one of the claims 4 to 7, wherein said radio communication device is a radio communication device software simulator.

9. A method of supporting a radio communication device (114) in transmitting messages in a first format, the first format not being serviced by said radio communication device (114), said method containing the following steps:
(a) generating (300) a message in a second format, which consists of at least one element, wherein said message is generated on a computing device connected to said radio communication device (114);
(b) converting (301) said elements into a message in said first format;
(c) forwarding said message to a Message Formatter (110) ;
(d) opitimization of said message;
(e) forwarding said message to said radio communication device (114);
(f) said radio communication device (114) transmitting said message.

10. The method according to claim 9, wherein said second format is an XML format.

11. The method according to claim 9, wherein said optimization includes fragmenting of said message.

12. The method according to claim 9, wherein after the step of generation of said message, additional steps are performed:
(a1) converting each said element of said message to a binary format;
(a2) transferring said elements to a Binary Engine.

13. The method according to any one of the claims 9 to 12, wherein said radio communication device is a radio communication device software simulator.
